# EUROPEAN PATENT APPLICATION

(11) **EP 4 228 360 A1**
(43) Date of publication of application: **16.08.2023**
(21) Application number: 21877864.5
(22) Date of filing: 10.09.2021
(51) Int. Cl.: H04W 72/12, H04W 76/27, H04W 88/08, H04W 4/70

(54) **RESOURCE ALLOCATION METHOD AND DEVICE IN WIRELESS COMMUNICATION SYSTEM**

(30) Priority: 05.10.2020 KR 20200128183
(71) Applicant: LG ELECTRONICS, INC., Seoul 07336 (KR)
(72) Inventor: KIM, Seokjung, Seoul 06772 (KR); XU, Jian, Seoul 06772 (KR); BYUN, Daewook, Seoul 06772 (KR)
(74) Representative: Frenkel, Matthias Alexander
(86) International application number: PCT/KR2021/012322
(87) International publication number: WO 2022/075612

(57) **Abstract**

The present specification relates to resource allocation in a wireless communication system. A method carried out by a distributed unit (DU) of a base station in a wireless communication system, according to various embodiments of the present specification, comprises the steps of: receiving, from a central unit (CU) of a base station, configuration information for carrying out multiple transmissions of small-scale data with a wireless device which is in an inactive state; on the basis of the configuration information, determining multiple resources for the multiple transmissions in the inactive state; transmitting, to the wireless device, resource information notifying of the multiple resources; and, on the basis of the multiple resources notified of by the resource information, carrying out the multiple transmissions of the small-scale data with the wireless device which is in the inactive state.

## Description

### TECHNICAL FIELD

The present disclosure relates to resource allocation in wireless communications.

### BACKGROUND

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

In a wireless communication system, resource allocation is required for a user equipment (UE) to communicate with a network. For this resource allocation, not only the UE needs to provide information to the network, but also information needs to be exchanged between nodes in the network. For example, in a network in which CU and DU are split and CU-CP and CU-UP are split, information needs to be exchanged between the nodes for resource allocation.

### SUMMARY

Various embodiments of the present disclosure provide a method and apparatus for resource allocation in a wireless communication system.

Various embodiments of the present disclosure provide a method and apparatus for allocating resources for multiple transmissions of small data in a wireless communication system.

Various embodiments of the present disclosure provide a method and apparatus for multiple transmissions using PUR in a wireless communication system.

According to various embodiments of the present disclosure, a method performed by a distributed unit (DU) of a base station in a wireless communication system comprises: receiving, from a central unit (CU) of the base station, configuration information for performing multiple transmissions of small data with a wireless device in an inactive state; based on the configuration information, determining a plurality of resources for the multiple transmissions in the inactive state; transmitting, to the wireless device, resource information informing the plurality of resources; and performing the multiple transmissions of small data with the wireless device in the inactive state based on the plurality of resources informed by the resource information.

According to various embodiments of the present disclosure, a distributed unit (DU) of a base station in a wireless communication system comprises: memory; transceiver; and at least one processor operatively coupled to the memory and the transceiver, wherein the at least one processor is configured to: control the transceiver to receive, from a central unit (CU) of the base station, configuration information for performing multiple transmissions of small data with a wireless device in an inactive state; based on the configuration information, determine a plurality of resources for the multiple transmissions in the inactive state; control the transceiver to transmit, to the wireless device, resource information informing the plurality of resources; and control the transceiver to perform the multiple transmissions of small data with the wireless device in the inactive state based on the plurality of resources informed by the resource information.

According to various embodiments of the present disclosure, a computer readable medium (CRM) stores instructions that, based on being executed by at least one processor, perform operations comprising: receiving, from a central unit (CU) of the base station, configuration information for performing multiple transmissions of small data with a wireless device in an inactive state; based on the configuration information, determining a plurality of resources for the multiple transmissions in the inactive state; transmitting, to the wireless device, resource information informing the plurality of resources; and performing the multiple transmissions of small data with the wireless device in the inactive state based on the plurality of resources informed by the resource information.

According to various embodiments of the present disclosure, a processing apparatus operating in a wireless communication system comprises: at least one processor; and at least one memory operably connectable to the at least one processor, wherein the at least one processor is adapted to perform operations comprising: receiving, from a central unit (CU) of the base station, configuration information for performing multiple transmissions of small data with a wireless device in an inactive state; based on the configuration information, determining a plurality of resources for the multiple transmissions in the inactive state; transmitting, to the wireless device, resource information informing the plurality of resources; and performing the multiple transmissions of small data with the wireless device in the inactive state based on the plurality of resources informed by the resource information.

According to various embodiments of the present disclosure, a method performed by a wireless device in a wireless communication system comprises: transmitting, in a connected state to a base station, configuration information for multiple uplink (UL) transmissions of small data; receiving, from the base station, a radio resource control (RRC) release message including a suspend indication and transiting to an inactive state, wherein the RRC release message comprises resource information informing a plurality of resources for the multiple UL transmissions in the inactivate state, and the plurality of resources are determined based on the configuration information; and performing, in the inactive state, the multiple UL transmissions of small data to the base station based on the plurality of resources informed by the resource information.

According to various embodiments of the present disclosure, a wireless device in a wireless communication system comprises: memory; transceiver; and at least one processor operatively coupled to the memory and the transceiver; wherein the at least one processor is configured to: control the transceiver to transmit, in a connected state to a base station, configuration information for multiple uplink (UL) transmissions of small data; control the transceiver to receive, from the base station, a radio resource control (RRC) release message including a suspend indication and transit to an inactive state, wherein the RRC release message comprises resource information informing a plurality of resources for the multiple UL transmissions in the inactivate state, and the plurality of resources are determined based on the configuration information; and control the transceiver to perform, in the inactive state, the multiple UL transmissions of small data to the base station based on the plurality of resources informed by the resource information.

The present disclosure can have various advantageous effects.

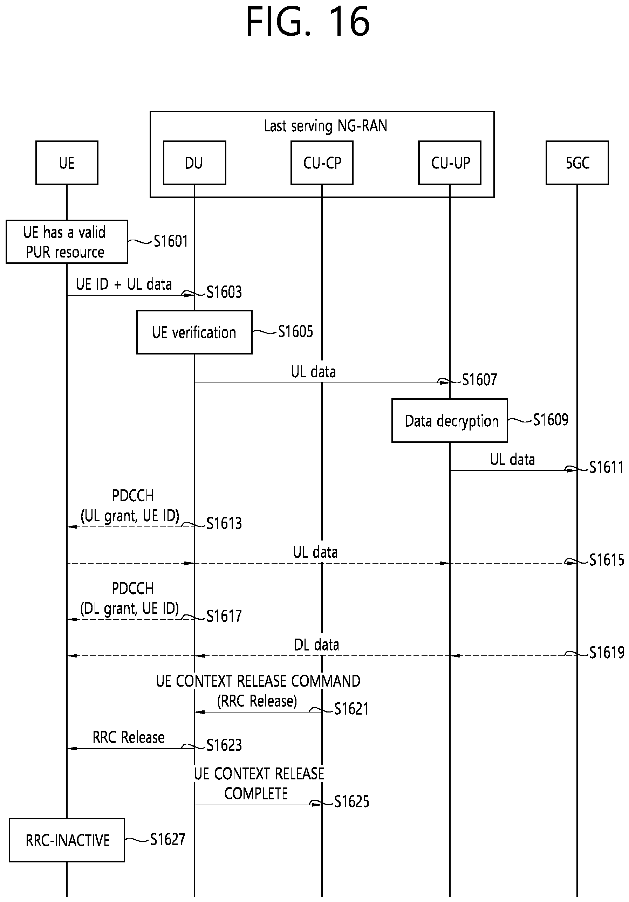

For example, the CU-CP may allocate PUR configurations to the UE. In addition, the CU-CP pre-configures the DU or CU-UP of how to behave when the UE attempts SDT transmission without using an RRC message as shown in FIG. 16, so that UP data can be quickly delivered to the UE or 5GC. Therefore, the UE can maintain the RRC-INACTIVE state again after quickly completing data transmission, and unnecessary energy consumption can be prevented.

For example, the CU-CP may request the DU to allocate resources required for multiple UL/DL transmissions of the UE. Therefore, since the UE can be prevented from transitioning to the RRC-CONNECTED state to transmit UP data, unnecessary signaling between the UE and the NG-RAN can be prevented. In addition, as shown in FIG. 16, since the UE can transmit only the UE ID and UP data without an RRC message, faster data transmission may be possible.

For example, as soon as the DU and/or CU-CP know that the PUR configuration allocated to the UE is no longer valid, it can immediately release resource allocation related to the PUR configuration, thereby preventing unnecessary resource waste.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIG. 5 shows an example of a network node to which implementations of the present disclosure is applied.
FIG. 6 shows an example of separation of a CU-control plane (CU-CP) and a CU-user plane (CU-UP) to which the implementation of the present disclosure is applied.
FIG. 7 shows an example of possible RRC states in a wireless communication system to which the implementation of the present disclosure is applied.
FIG. 8 shows an example of a PUR configuration procedure to which the implementation of the present disclosure is applied.
FIG. 9 shows an example of a transmission procedure using PUR to which the implementation of the present disclosure is applied.
FIG. 10 shows an example of a preconfigured PUSCH-based SDT procedure to which the implementation of the present disclosure is applied.
FIG. 11 shows an example of a method for delivering resource information for multiple transmission in an inactive state according to an embodiment of the present disclosure.
FIG. 12 shows an example of a method for receiving resource information for multiple transmissions in an inactive state according to an embodiment of the present disclosure.
FIG. 13 shows an example of a procedure for configuring transmission using PUR in an inactive state according to an embodiment of the present disclosure.
FIG. 14 shows an example of a transmission procedure using PUR of CP small data in an inactive state according to an embodiment of the present disclosure.
FIG. 15 shows an example of a transmission procedure using PUR together with an RRC message for UP small data in an inactive state according to an embodiment of the present disclosure.
FIG. 16 shows an example of a transmission procedure using PUR without an RRC message for UP small data in an inactive state according to an embodiment of the present disclosure.
FIG. 17 shows a PUR configuration release procedure according to an embodiment of the present disclosure.

### DETAILED DESCRIPTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A orB" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

The definitions of terms used in the disclosure are as follows:
"Small data" means data having a size less than a threshold value. The threshold value may be determined/set in advance or set from a network.
"Last serving base station" refers to a base station to which a UE not currently in an RRC connection state (e.g., a UE currently in an RRC idle and/or inactive state) established an RRC connection immediately before. That is, the last serving base station means the base station where the UE was in the last RRC connected state.

In the disclosure, the terms "radio access network (RAN) node," "base station," "eNodeB (eNB)," "gNodeB (gNB)," and "cell" may be used interchangeably. , UE is a type of wireless device, and 'UE' and 'wireless device' may be used interchangeably.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

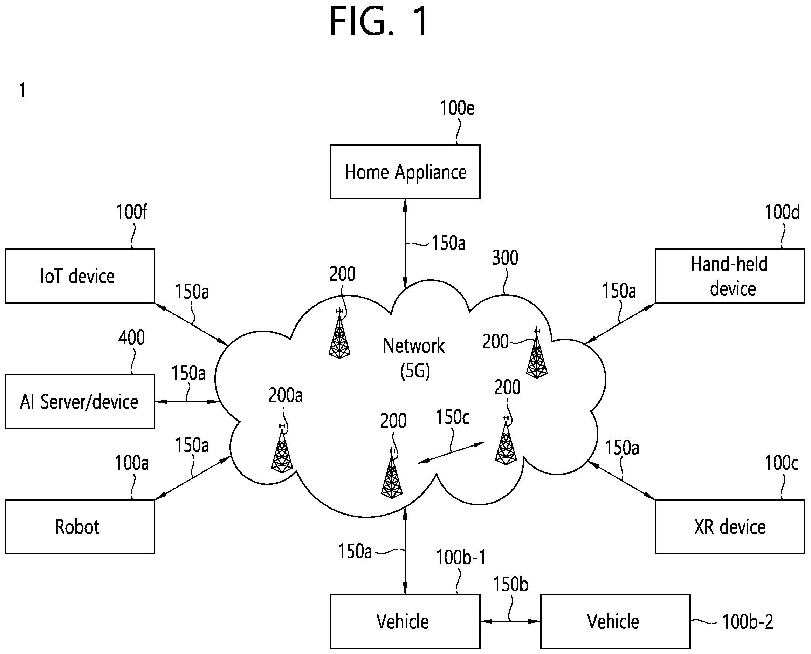

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sensors in all fields, i.e., mMTC. It is expected that the number of potential Internet-of-things (IoT) devices will reach 204 hundred million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a smart grid, automatize industry, achieve robotics, and control and adjust a drone.

5G is a means of providing streaming evaluated as a few hundred megabits per second to gigabits per second and may complement fiber-to-the-home (FTTH) and cable-based broadband (or DOCSIS). Such fast speed is needed to deliver TV in resolution of 4K or more (6K, 8K, and more), as well as virtual reality and augmented reality. Virtual reality (VR) and augmented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile communication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object in the dark in addition to an object seen from a front window and displays a distance from the object and a movement of the object by overlapping information talking to the driver. In the future, a wireless module enables communication between vehicles, information exchange between a vehicle and supporting infrastructure, and information exchange between a vehicle and other connected devices (e.g., devices accompanied by a pedestrian). A safety system guides alternative courses of a behavior so that a driver may drive more safely drive, thereby lowering the danger of an accident. The next stage will be a remotely controlled or self-driven vehicle. This requires very high reliability and very fast communication between different self-driven vehicles and between a vehicle and infrastructure. In the future, a self-driven vehicle will perform all driving activities and a driver will focus only upon abnormal traffic that the vehicle cannot identify. Technical requirements of a self-driven vehicle demand ultra-low latency and ultra-high reliability so that traffic safety is increased to a level that cannot be achieved by human being.

A smart city and a smart home/building mentioned as a smart society will be embedded in a high-density wireless sensor network. A distributed network of an intelligent sensor will identify conditions for costs and energy-efficient maintenance of a city or a home. Similar configurations may be performed for respective households. All of temperature sensors, window and heating controllers, burglar alarms, and home appliances are wirelessly connected. Many of these sensors are typically low in data transmission rate, power, and cost. However, real-time HD video may be demanded by a specific type of device to perform monitoring.

Consumption and distribution of energy including heat or gas is distributed at a higher level so that automated control of the distribution sensor network is demanded. The smart grid collects information and connects the sensors to each other using digital information and communication technology so as to act according to the collected information. Since this information may include behaviors of a supply company and a consumer, the smart grid may improve distribution of fuels such as electricity by a method having efficiency, reliability, economic feasibility, production sustainability, and automation. The smart grid may also be regarded as another sensor network having low latency.

Mission critical application (e.g., e-health) is one of 5G use scenarios. A health part contains many application programs capable of enjoying benefit of mobile communication. A communication system may support remote treatment that provides clinical treatment in a faraway place. Remote treatment may aid in reducing a barrier against distance and improve access to medical services that cannot be continuously available in a faraway rural area. Remote treatment is also used to perform important treatment and save lives in an emergency situation. The wireless sensor network based on mobile communication may provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with reconstructible wireless links is an attractive opportunity in many industrial fields. However, in order to achieve this replacement, it is necessary for wireless connection to be established with latency, reliability, and capacity similar to those of the cable and management of wireless connection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low data rate but require location information with a wide range and reliability.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

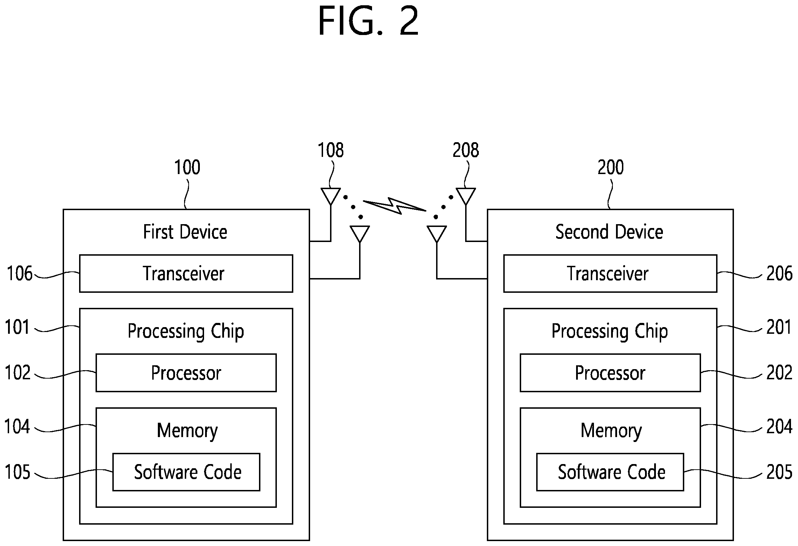

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names. FIG. 2 shows an example of wireless devices to which implementations of the present disclosure is applied.

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be adapted to include the modules, procedures, or functions. Firmware or software adapted to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

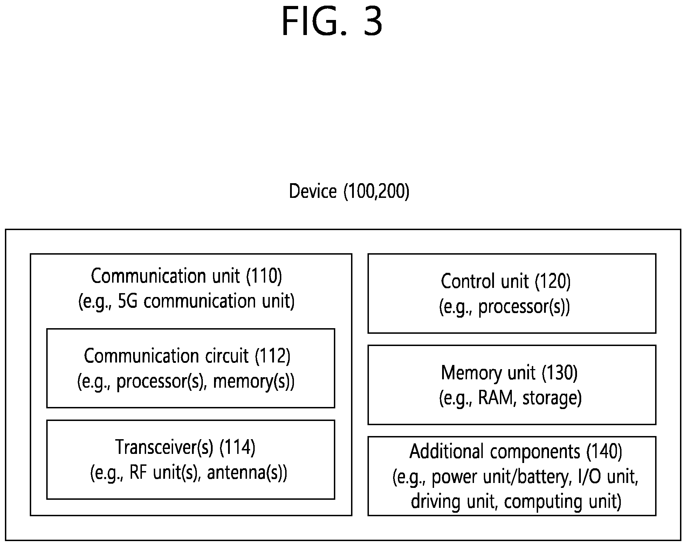

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

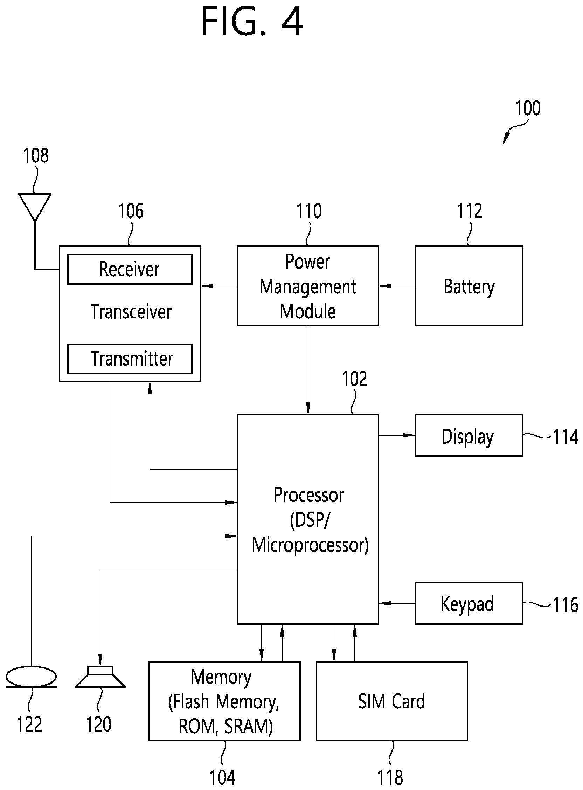

FIG. 4 shows an example of UE to which implementations of the present disclosure is applied.

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

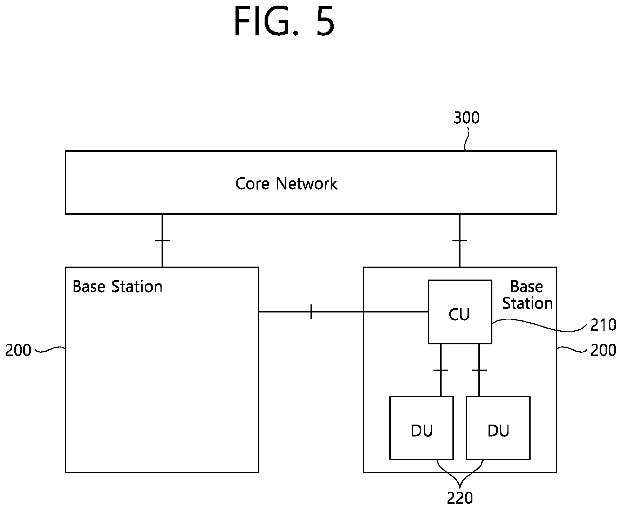

FIG. 5 shows an example of a network node to which implementations of the present disclosure is applied.

FIG. 5 is a diagram illustrating the second wireless device 200 of FIG. 2 or the wireless device 200 of FIG. 3 described above in more detail, when the base station is divided into a central unit (CU) and a distributed unit (DU).

Referring to FIG. 5, base station 200 may be connected to core network 300. Base stations 200 may be connected to each other. For example, an interface between the base station 200 and the core network 300 may be referred to as NG. For example, an interface between base stations 200 may be referred to as Xn.

Base station 200 may be divided into CU 210 and DU 220. That is, base station 200 may be hierarchically separated and operated. CU 210 may be connected to one or more DUs 220. For example, an interface between the CU 210 and the DU 220 may be referred to as F1. The CU 210 may perform a function of upper layers of the base station 200, and the DU 220 may perform a function of lower layers of the base station 200. For example, the CU 210 may be a logical node hosting RRC, SDAP, and PDCP layers of the base station 200 (e.g., gNB). Alternatively, the CU (W32) may be a logical node hosting the RRC and PDCP layers of the base station 200 (e.g., ng-eNB). For example, DU 220 may be a logical node hosting the RLC, MAC and PHY layers of the base station.

The operation of DU 220 may be partially controlled by CU 210. One DU 220 may support one or more cells. One cell may be supported by only one DU 220. One DU 220 may be connected to one CU 210, and one DU 220 may be connected to a plurality of CUs 210 according to appropriate implementation.

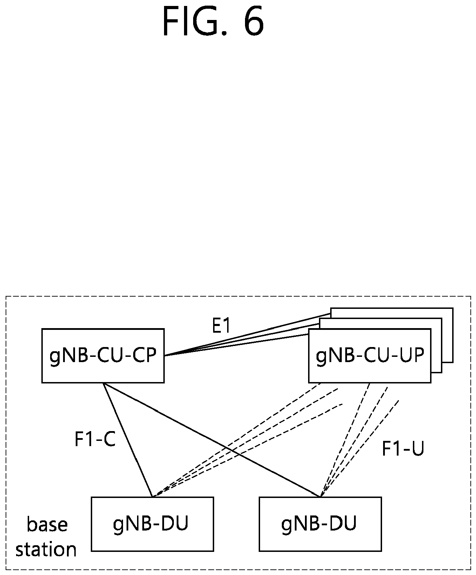

FIG. 6 shows an example of separation of a CU-control plane (CU-CP) and a CU-user plane (CU-UP) to which the implementation of the present disclosure is applied.

Referring to FIG. 6, a base station may include a CU-CP, a plurality of CU-UPs, and DUs. CU-CP and CU-UP may be included in CU.

A CU-CP may be a logical node hosting the RRC and control plane part of the base station CU's PDCP protocol. As shown in FIG. 6, the CU-CP may be connected to the DU through the F1-C interface. CU-CP may be an endpoint of an E1 interface connected to CU-UP and an F1-C interface connected to DU.

A CU-UP may host a user plane part of the base station CU's PDCP protocol and/or a user plane party of the base station CU's SDAP protocol and PDCP protocol. As shown in FIG. 6, the CU-UP may be connected to the DU through the F1-U interface and the CU-CP through the E1 interface. CU-UP may be an endpoint of an E1 interface connected to CU-CP and an F1-U interface connected to DU.

As shown in Figure 6, the following properties can be derived:
(1) One DU can be connected to one CU-CP.
(2) One CU-UP can be connected to one CU-CP.
(3) One DU may be connected to a plurality of CU-UPs under the control of the same CU-CP (i.e., a CU-CP to which one DU and a plurality of CU-UPs are connected).
(4) One CU-UP may be connected to a plurality of DUs under the control of the same CU-CP (i.e., a CU-CP to which one DU and a plurality of CU-UPs are connected).

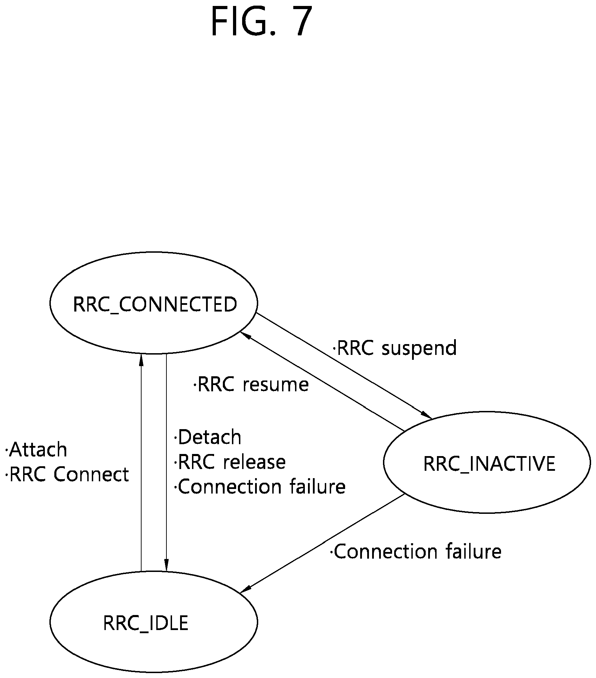

FIG. 7 shows an example of possible RRC states in a wireless communication system to which the implementation of the present disclosure is applied.

Referring to FIG. 7, there are three possible RRC states in a wireless communication system. The three RRC states may include RRC_IDLE, RRC_CONNECTED and/or RRC INACTIVE.

In RRC_IDLE (or idle mode/state), an RRC context for communication between the UE and the network may not be established in the RAN, and the UE may not belong to a specific cell. Also, in RRC_IDLE, there may not exist a core network connection to the UE. Since the UE is in a sleep mode most of the time to reduce battery consumption, data transmission between the UE and the network may not occur. A UE in RRC_IDLE may wake up periodically to receive paging messages from the network. Mobility can be handled by the UE through cell reselection. Since uplink synchronization is not maintained, the UE may not perform other uplink transmissions other than transmissions for random access (e.g., random access preamble transmission) in order to transition to RRC_CONNECTED.

In RRC_CONNECTED (or connected mode/state), an RRC context for communication between the UE and the network may be established in the RAN. Also, in RRC_CONNECTED, a core network connection to the UE may be established. Since the UE belongs to a specific cell, a cell-radio network temporary identifier (C-RNTI) for signaling between the UE and the network may be configured for the UE. Data forwarding between the UE and the network may occur. Mobility can be handled by the network - that is, the UE provides a measurement report to the network, and the network can send mobility commands to the UE to cause the UE to perform mobility. UL timing alignment needs to be established based on random access and needs to be maintained for data transmission.

In RRC_INACTIVE (or inactive state/mode), the RRC context for communication between the UE and the network may be maintained in the RAN. Data forwarding between the UE and the network may not occur. Since the core network connection is maintained for the UE, the UE can quickly transit to a connected state for data transfer. For transitioning to the connected state, core network signaling may not be required. An RRC context may already be established in the network, and the transition from idle state to inactive state may be handled in the RAN. The UE may be allowed to sleep in a similar way as in RRC_IDLE, and mobility may be handled through cell reselection without network involvement. RRC_INACTIVE can be understood as a mix of an idle state and a connected state.

As shown in FIG. 7, the UE may transition from RRC_IDLE to RRC_CONNECTED by performing an initial access procedure or an RRC connection establishment procedure. The UE may transition from RRC_CONNECTED to RRC_IDLE when connection release, RRC connection release, and/or connection failure (e.g., radio link failure (RLF)) occurs. The UE may transition from RRC_CONNETED to RRC_INACTIVE when the RRC connection is suspended, and may transition from RRC INACTIVE to RRC CONNECTED when the RRC connection is resumed. The UE may transition from RRC_INACTIVE to RRC_IDLE when a connection failure such as RLF occurs.

Hereinafter, contents related to a preconfigured uplink resource (PUR) will be described.

Transmission using PUR may allow uplink transmission in RRC_IDLE and/or RRC_INACTIVE using PUR without performing a random access procedure.

Transmission using PUR may be enabled by the base station if the UE and/or base station support it.

The UE may request that PUR be set in RRC CONNECTED mode or request that PUR be set to be released. The base station may determine to set the PUR based on the UE's request, the UE's subscription information and/or policy. PUR may be valid only for the cell in which the PUR configuration is received.

Transmission using PUR may be triggered when an upper layer requests establishment or resumption of an RRC connection, the UE has a valid PUR, and satisfies a timing advance (TA) validation condition.

Transmission using PUR may be applied to bandwidth reduced low complexity (BL) UEs, NB-IoT UEs, and/or UEs in enhanced coverage. For example, the PUR may be used for transmitting small data in an inactive or idle state without the UE transitioning to the connected state (or before transitioning to the connected state).

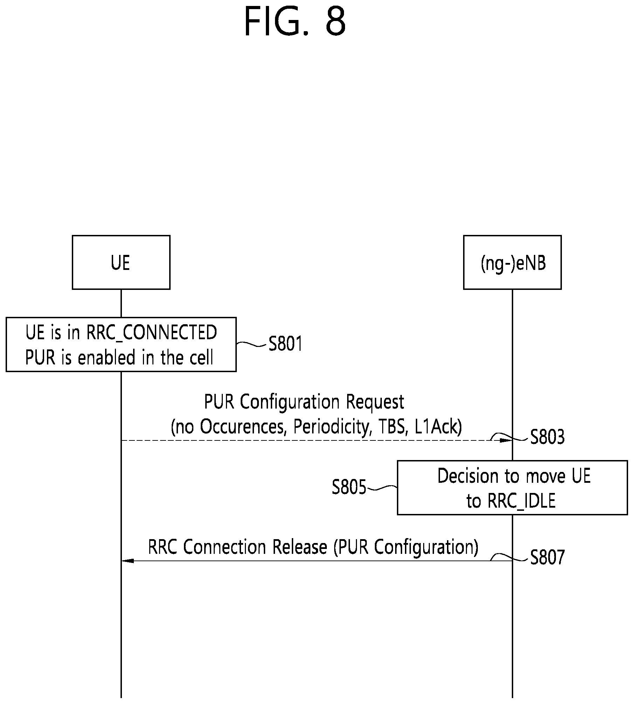

FIG. 8 shows an example of a PUR configuration procedure to which the implementation of the present disclosure is applied.

Referring to FIG. 8, in step S801, the UE is in RRC_CONNECTED and PUR may be activated in the cell.

In step S803, the UE may request PUR configuration by sending a PUR configuration request message to the base station. The PUR configuration request message may provide information about requested resources (e.g., how many times to transmit, period, time offset, transport block size (TBS), RRC acknowledgment (ACK)). Alternatively, the UE may request release of the PUR from the base station through a PUR configuration request message.

In step S805, the base station may determine to transition the UE to RRC_IDLE.

In step S807, when the base station makes the UE transition to RRC_IDLE, based on the PUR configuration request, subscription information and/or policy, the base station can determine to provide PUR resources to the UE or to release existing PUR resources. The base station may transmit an RRC connection release message to the UE, where the RRC connection release message may include a PUR configuration, detailed information on the PUR configuration, or a PUR release indicator.

PUR configuration can be implicitly released by the UE and base station when the UE accesses another cell, when PUR is no longer active in the cell, and/or when the PUR resource is not used for a configured number of consecutive occasions.

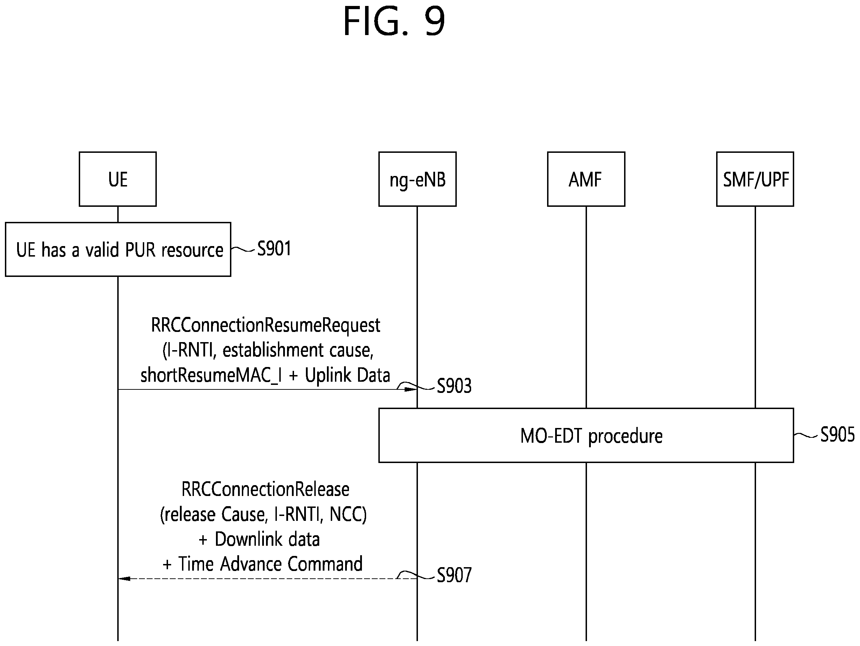

FIG. 9 shows an example of a transmission procedure using PUR to which the implementation of the present disclosure is applied.

Referring to FIG. 9, in step S901, the UE has valid PUR resources according to the PUR configuration. The UE may currently be in an idle or inactive state.

In step S903, the UE may transmit an RRC connection resumption request message and at least some uplink data to the base station using the PUR resource instead of the resource allocated in the random access response. The RRC connection resume request message may include at least one of an inactive radio network temporary identifier (I-RNTI), a reason for establishment, and *shortResumeMAC-I.* If the size of the uplink data is too large to be included in transmission using the PUR, the UE may transmit an RRC connection resumption request message and a part of the uplink data using the PUR.

In step S905, a mobile originated early data transmission (MO-EDT) procedure may be performed.

In step S907, the base station may transmit an RRC connection release message to the UE. The RRC connection release message may include a release cause and at least one of an I-RNTI or a next hop changing count (NCC). The base station may transmit downlink data and/or TA commands to the UE along with the RRC connection release message. When an RRC connection release message rather than an RRC connection resume message is received in response to the RRC connection resume request message, the UE may continue to be in an idle or inactive state without transitioning to a connected state.

Hereinafter, contents related to the preconfigured PUSCH will be described. In the disclosure, the preconfigured PUSCH may be included in the PUR and/or used interchangeably with the PUR. Therefore, the description of PUR in the disclosure can be equally applied to a preconfigured PUSCH.

The RRC_INACTIVE UE may resume connection by performing random access for UL and/or DL data transfer, and may transition to the RRC_CONNECTED state. For small and infrequent data transfers in RRC_INACTIVE, if a connection resumption to RRC CONNECTED and a subsequent connection suspension to RRC INACTIVE occur for each data transmission, unnecessary UE power consumption and signaling overhead as well as increased packet delay may occur. can Small data transmission (SDT) in the RRC INACTIVE state can avoid the above-mentioned weakness and can provide a more efficient and flexible method for transmitting small and infrequent data. For example, for SDT in the RRC INACTIVE state, a preconfigured PUSCH may be considered.

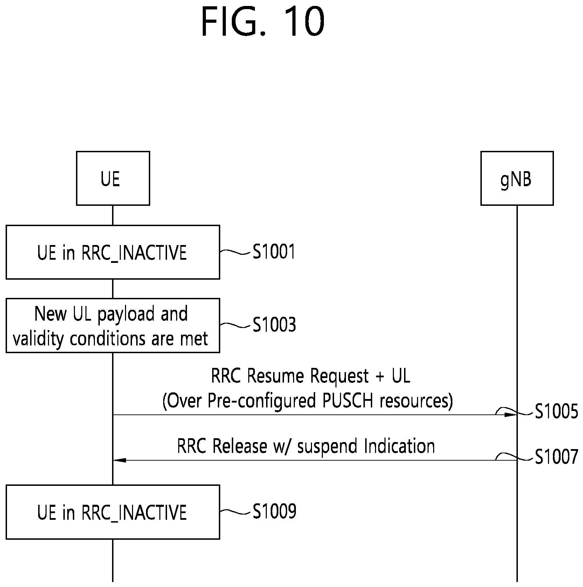

FIG. 10 shows an example of a preconfigured PUSCH-based SDT procedure to which the implementation of the present disclosure is applied.

Referring to FIG. 10, in step S 1001, the UE is in the RRC_INACTIVE state.

In step S1003, the UE may identify a new UL payload and identify that validity conditions are satisfied.

In step S1005, the UE may transmit an RRC resume request message and the UL payload through a preconfigured PUSCH resource.

In step S1007, the UE may receive an RRC release message including a suspend indicator. Accordingly, the UE may continue to be in an inactive state without transitioning to a connected state.

In step S1009, the UE is in RRC_INACTIVE state.

The network may inform the UE of the preconfigured PUSCH-based SDT resource through dedicated signaling such as an RRC release message. Alternatively, the network may inform the UE of at least a part of preconfigured PUSCH-based SDT resource configuration to the UE through broadcast signaling. An advantage of broadcast signaling is that it can minimize signaling overhead associated with changing configurations common to a group of UEs.

As described above, the UE may transmit small data while maintaining the RRC-INACTIVE state. For example, the UE may transmit small data using a preconfigured PUSCH and/or PUR in the RRC INACTIVE state.

Various embodiments of the present disclosure propose a method of how to allocate a PUR to a UE in an environment where base stations are split into CU-CP, CU-UP, and DU, how the UE exchanges UP data with the base station using the PUR, and/or how to release PUR as quickly as possible to avoid unnecessary resource allocation.

Various embodiments of the present disclosure propose a method for performing a plurality of UL / DL transmissions using PUR while maintaining an RRC-INACTIVE state in a situation where CU-DU split and CP-UP separation are considered.

Hereinafter, at least some of service operations between core network functions (NFs) may be replaced with newly defined service operations. In addition, some of the N2 messages between the AMF and the base station may be replaced with newly defined N2 messages. In addition, some of the RRC messages between the base station and the UE described below may be replaced with newly defined RRC messages.

In the procedures below, certain steps may be performed concurrently/parallel, or may be performed in reversed order.

The names of indications or parameter information proposed below are examples, and may be replaced with other names for the proposed procedure/purpose/method.

The following drawings are created to explain specific embodiments of the present disclosure. The names of the specific devices or the names of the specific signals/messages/fields shown in the drawings are provided by way of example, and thus the technical features of the present disclosure are not limited to the specific names used in the following drawings.

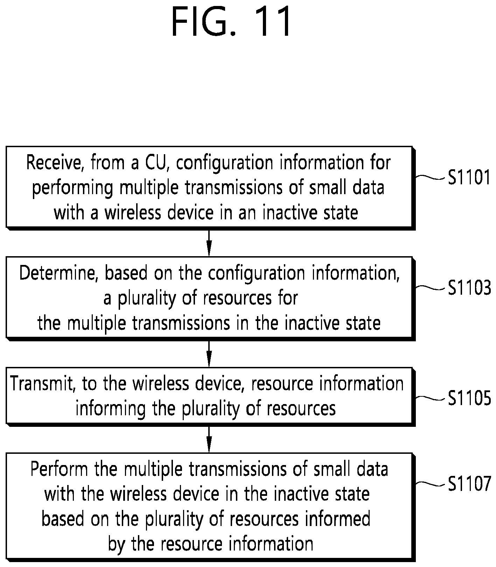

FIG. 11 shows an example of a method for delivering resource information for multiple transmission in an inactive state according to an embodiment of the present disclosure. The steps illustrated in FIG. 11 may be performed by the DU and/or the base station.

Referring to FIG. 11, in step S1101, the DU may receive, from a CU, configuration information for performing multiple transmissions of small data with a wireless device in an inactive state.

In step S1103, The DU may determine, based on the configuration information, a plurality of resources for the multiple transmissions in the inactive state.

In step S1105, the DU may transmit, to the wireless device, resource information informing the plurality of resources. For example, the DU may transfer the resource information to the CU-CP, and the CU-CP may transfer an RRC message including the resource information to the wireless device.

In step S1107, the DU may perform the multiple transmissions of small data with the wireless device in the inactive state based on the plurality of resources informed by the resource information.

According to various embodiments of the present disclosure, the configuration information may include at least one of a number of configured allocation occasions, a configured transport block size (TBS), or an expected number of radio resource control (RRC) messages.

According to various embodiments of the present disclosure, the multiple transmissions may include at least one of multiple downlink (DL) transmissions or multiple uplink (UL) transmissions.

According to various embodiments of the present disclosure, the DU may receive a preconfigured uplink resource (PUR) configuration request message including the configuration information from the CU.

According to various embodiments of the present disclosure, the configuration information may comprise at least one of a number of requested preconfigured uplink resource (PUR) allocation occasions, a period of requested PUR occasions, a time offset until an initial PUR occasion, a transport block size (TBS) requested for PUR, preference for transmitting UL data and RRC messages together when UL data is transmitted using PUR, or an acknowledge (ACK) for UL data when UL data is transmitted using PUR.

According to various embodiments of the present disclosure, the resource information may include a PUR resource. The PUR resource may include at least one of a number of PUR allocation occasions, a period of PUR occasions, or a time offset until an initial PUR occasion.

According to various embodiments of the present disclosure, the DU may receive a PUR configuration request message including the configuration information from the wireless device in a connected state. The DU may transmit a radio resource control (RRC) release message including a suspend indication to the wireless device so that the wireless device transits to the inactive state. The RRC release message may include the PUR configuration.

According to various embodiments of the present disclosure, the DU may release the PUR configuration for the wireless device. The DU may transmit a UE context release request message to the CU for requesting release of a user equipment (UE) context associated with the wireless device. The UE context release request message may include a cause value related to release of the PUR configuration. The DU may receive, from the CU, a UE context release command message informing release of the UE context. The DU may transmit a UE context release complete message to the CU.

According to various embodiments of the present disclosure, the PUR configuration may be valid only for a cell in which the PUR configuration is received. The DU may release the PUR configuration based on the wireless device leaving the cell, the wireless device not performing UL data transmission during a preconfigured number of consecutive PUR occasions, or expiration of timing alignment (TA) timer.

According to various embodiments of the present disclosure, the resource information may include a physical downlink control channel (PDCCH) for allocating the plurality of resources.

According to various embodiments of the present disclosure, the base station may be the last serving base station.

According to various embodiments of the present disclosure, the CU may include a CU-control plane (CU-CP).

According to various embodiments of the present disclosure, to transmit small data while maintaining in an inactive state, the UE may transmit a request for multiple UL transmissions and small data to a wireless network based on the PUR configuration received from the network. After verifying the UE, the CU-CP of the radio network may inform the DU of the radio network that multiple UL/DL transmissions are required based on the stored UE context. A DU of the wireless network may allocate resources for the multiple UL/DL transmissions to UDs.

Furthermore, the method in perspective of the DU described above in FIG. 11 may be performed by the first wireless device 200 shown in FIG. 2, the wireless device 200 shown in FIG. 3, and/or the network node 200 shown in FIG. 5.

More specifically, the base station comprises at least one transceiver, at least one processor, and at least one memory operably connectable to the at least one processor. The at least one memory stores instructions to cause the at least one processor to perform operations below. The at least one processor may be configured to control the transceiver to receive, from a CU, configuration information for performing multiple transmissions of small data with a wireless device in an inactive state. The at least one processor may be configured to determine, based on the configuration information, a plurality of resources for the multiple transmissions in the inactive state. The at least one processor may be configured to control the transceiver to transmit, to the wireless device, resource information informing the plurality of resources. The at least one processor may be configured to control the transceiver to perform the multiple transmissions of small data with the wireless device in the inactive state based on the plurality of resources informed by the resource information.

Furthermore, the method in perspective of the DU described above in FIG. 11 may be performed by control of the processor 102 included in the first wireless device 100 shown in FIG. 2, by control of the communication unit 110 and/or the control unit 120 included in the wireless device 100 shown in FIG. 3, and/or by control of the processor 102 included in the UE 100 shown in FIG. 4.

More specifically, a processing apparatus operating in a wireless communication system comprises at least one processor, and at least one memory operably connectable to the at least one processor. The at least one processor is adapted to perform operations comprising: receiving, from a central unit (CU) of the base station, configuration information for performing multiple transmissions of small data with a wireless device in an inactive state; based on the configuration information, determining a plurality of resources for the multiple transmissions in the inactive state; transmitting, to the wireless device, resource information informing the plurality of resources; and performing the multiple transmissions of small data with the wireless device in the inactive state based on the plurality of resources informed by the resource information.

Furthermore, the method in perspective of the DU described above in FIG. 11 may be performed by a software code 105 stored in the memory 104 included in the first wireless device 100 shown in FIG. 2.

The technical features of the present disclosure may be embodied directly in hardware, in a software executed by a processor, or in a combination of the two. For example, a method performed by a wireless device in a wireless communication may be implemented in hardware, software, firmware, or any combination thereof. For example, a software may reside in RAM, flash memory, ROM, EPROM, EEPROM, registers, hard disk, a removable disk, a CD-ROM, or any other storage medium.

Some example of storage medium may be coupled to the processor such that the processor can read information from the storage medium. In the alternative, the storage medium may be integral to the processor. The processor and the storage medium may reside in an ASIC. For other example, the processor and the storage medium may reside as discrete components.

The computer-readable medium may include a tangible and non-transitory computer-readable storage medium.

For example, non-transitory computer-readable media may include RAM such as synchronous dynamic random access memory (SDRAM), ROM, non-volatile random access memory (NVRAM), EEPROM, flash memory, magnetic or optical data storage media, or any other medium that can be used to store instructions or data structures. Non-transitory computer-readable media may also include combinations of the above.

In addition, the method described herein may be realized at least in part by a computer-readable communication medium that carries or communicates code in the form of instructions or data structures and that can be accessed, read, and/or executed by a computer.

According to some implementations of the present disclosure, a non-transitory computer-readable medium (CRM) has stored thereon a plurality of instructions.

More specifically, CRM stores instructions to cause at least one processor to perform operations. The operations comprise: receiving, from a central unit (CU) of the base station, configuration information for performing multiple transmissions of small data with a wireless device in an inactive state; based on the configuration information, determining a plurality of resources for the multiple transmissions in the inactive state; transmitting, to the wireless device, resource information informing the plurality of resources; and performing the multiple transmissions of small data with the wireless device in the inactive state based on the plurality of resources informed by the resource information.

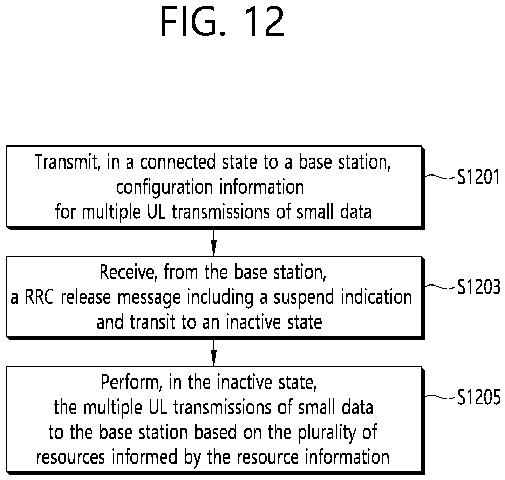

FIG. 12 shows an example of a method for receiving resource information for multiple transmissions in an inactive state according to an embodiment of the present disclosure. The steps illustrated in FIG. 12 may be performed by a wireless device and/or UE.

Referring to FIG. 12, in step S1201, the wireless device may transmit, in a connected state to a base station, configuration information for multiple uplink (UL) transmissions of small data.

In step S1203, the wireless device may receive, from the base station, a radio resource control (RRC) release message including a suspend indication and transit to an inactive state,

In step S1205, the wireless device may perform, in the inactive state, the multiple UL transmissions of small data to the base station based on the plurality of resources informed by the resource information.

Furthermore, the method in perspective of the wireless device described above in FIG. 12 may be performed by the second wireless device 200 shown in FIG. 2, the wireless device 200 shown in FIG. 3, and/or the network node 200 shown in FIG. 5.

More specifically, the wireless device comprises at least one transceiver, at least one processor, and at least one memory operably connectable to the at least one processor. The at least one memory stores instructions to cause the at least one processor to perform operations below. The at least one processor is configured to control the transceiver to transmit, in a connected state to a base station, configuration information for multiple uplink (UL) transmissions of small data. The at least one processor is configured to control the transceiver to receive, from the base station, a radio resource control (RRC) release message including a suspend indication and transit to an inactive state. The at least one processor is configured to control the transceiver to perform, in the inactive state, the multiple UL transmissions of small data to the base station based on the plurality of resources informed by the resource information.

Hereinafter, details of the disclosure are described.

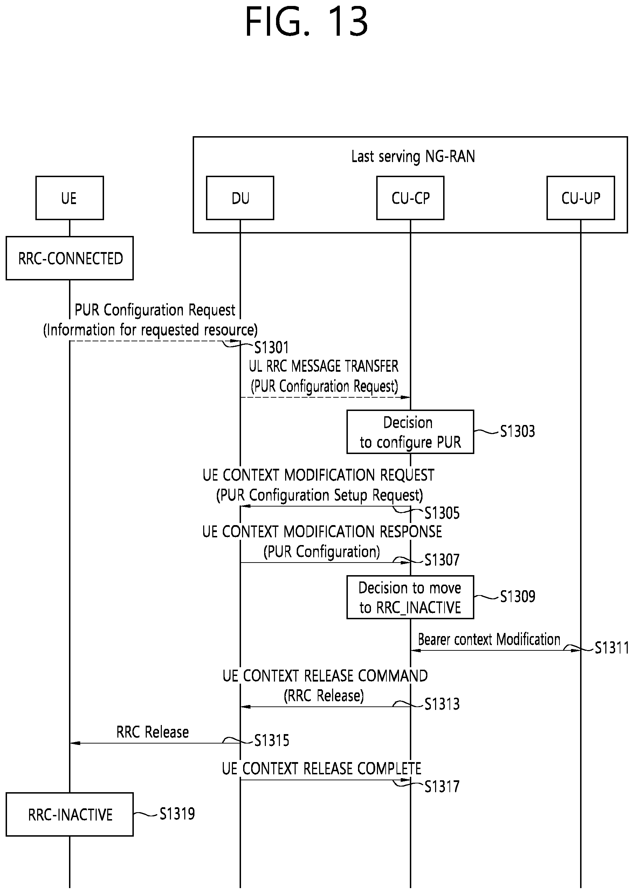

FIG. 13 shows an example of a procedure for configuring transmission using PUR in an inactive state according to an embodiment of the present disclosure. FIG. 13 shows a method in which the CU-CP pre-configures and/or allocates a PUR to be used by the UE to transmit small data in the RRC_INACTIVE state.

Referring to FIG. 13, the UE is in the RRC_CONNECTED state.

In step S1301, if receiving an indication related to PUR from an upper layer, the UE may transmit an RRC message requesting PUR configuration (i.e., a PUR configuration request message) to the base station. In addition, the UE may notify the base station of the PUR configuration desired by the UE by including information on the requested resource in the corresponding RRC message. Information about the requested resource may include at least one of the following:
1) the number of requested PUR allocation occasions;
2) a period of requested PUR occasions and a time offset until the initial PUR occasion;
3) transport block size (TBS) requested for PUR;
4) When transmitting UL data using PUR, whether the UE wants to transmit UL data together with an RRC message; and/or
5) When transmitting UL data using PUR, whether the UE wants to receive an ACK in the form of an RRC message (e.g., an L1 layer ACK or a response using MAC CE).

If the base station is split into CU-DU, the DU receiving the PUR configuration request message from the UE may transfer the corresponding RRC message (= PUR configuration request message) to the CU-CP through a UL RRC MESSAGE TRANSFER message.

In step S1303, the CU-CP may determine to allocate and/or configure PUR resources for the UE according to the request from the UE received in step S1301, subscription information of the UE, and/or local policy.

In step S1305, the CU-CP may transmit a UE CONTEXT MODIFICATION REQUEST message including a "PUR setup configuration request" indicator requesting PUR configuration for the UE to the DU.

The "PUR setup configuration request" indicator may include information that can be referred to when the DU allocates the PUR configuration in addition to information requesting the PUR configuration for the UE to the DU. For example, the "PUR configuration request" indicator may additionally include information such as "requested resource information" received from the UE in step S1301, UE subscription information, and/or local policy.

As in 4) of step S1301, in step S1305, the CU-CP may determine in advance how the DU should behave in a situation where the UE attempts UL data transmission using only the PUR configuration allocated from the DU without an RRC message. For example, when a DU requires a security procedure in the MAC layer in the process of verifying the UE, the CU-CP may allocate a security key related to it and deliver it to the DU, and/or if the UL data is transmitted to the DU using PUR without an RRC message, it is also possible to request the CU-CP be notified of this. In addition, the CU-CP may inform the DU in advance that a specific RLC bearer can be used for SDT.

In addition, in preparation for the case where multiple UL transmissions from the UE or multiple DL data transmissions from the 5GC is required while the UE is in the RRC-INACTIVE state, the CU-CP may configure in advance information necessary for dividing and transmitting UP data several times to the DU, that is, the number of configured UL/DL allocation occasions, configured TBS and/or the number of expected UL/DL RRC messages.

In addition, as in 5) of step S1301, when the UE intends to receive the ACK for UL data through the L1 layer ACK or MAC CE instead of the RRC message, the CU-CP is requested to inform the DU of this. After confirming this request, the DU decides in which form (e.g., RRC message, L1 layer ACK, MAC CE) to send the ACK for the UL data to the UE, and informs the UE by including it in the PUR configuration transmitted in step S1307.

In step S1307, the DU may allocate PUR configurations for the UE and deliver the allocated PUR configurations to the CU-CP through a UE CONTEXT MODIFICATION RESPONSE message.

In the process of assigning the PUR configurations by the DU, the DU may inform to the UE that the timing alignment and/or timing advance (TA) for UL transmission is guaranteed during the timeAlignmentTimer (or a timer that performs an equivalent function). At this time, if the RAN-based notification are (RNA) timer expires later than timeAlignmentTimer (or a timer that performs an equivalent function) (thus, if the UE and the DU release the PUR configuration), for a certain period of time while in RRC_INACTIVE, SDT using PUR may not be possible. To prevent this, the DU may refer to the timeAlignmentTimer (or equivalent timer) when configuring the RNA timer value by transferring the timeAlignmentTimer (or equivalent timer) to the CU-CP as well.

Alternatively, in step S1305, the CU-CP may transfer the RNA timer value to the DU so that the DU may refer to the RNA timer value when configuring the timeAlignmentTimer (or equivalent timer) value.

The DU may inform the CU-CP of the list of candidate PUR configurations through the SIB, and inform the CU-CP of only the PUR configuration ID actually allocated to the UE in step S1307. When the UE receives the PUR configuration ID actually allocated to the UE, only the PUR configuration corresponding to the PUR configuration ID among the list of candidate PUR configurations being broadcast through the SIB may be reflected in the UE configuration. In this case, the DU may inform the CU-CP of the list of candidate PUR configurations that the DU can allocate in advance through the F1 configuration procedure or the configuration update procedure.

In step S1309, due to UE inactivity, the CU-CP may determine to transition the UE to the RRC-INACTIVE state.

In step S1311, the CU-CP may inform the CU-UP that the UE has transitioned to the RRC-INACTIVE state using a bearer context modification procedure.

As in 4) of step S1301, in a situation where the UE attempts UL data transmission using only the PUR configuration allocated from the DU without an RRC message, the CU-CP can determine in step S1311 how the CU-UP should behave in advance. For example, when UL data is transmitted through PUR without an RRC message, it is also possible for the CU-CP to request the CU-UP to inform the CU-CP of the arrival of UL data. Alternatively, the CU-CP may determine in advance whether the CU-UP may transmit the UL data to the 5GC after decrypting the UL data using the existing security key without notifying the CU-CP that the UL data has been received.

In step S1313, the CU-CP generates an RRC release message including a suspend indication to transition the UE to the RRC-INACTIVE state, and then transfers the RRC release message to the DU through a UE CONTEXT RELEASE COMMAND message. The RRC message may also include PUR configuration information allocated for the UE.

At this time, the CU-CP may include a PUR configuration indication in the UE CONTEXT RELEASE COMMAND message so that the DU can store the UE context for PUR without deleting the UE context.

The PUR configuration indication may be included in a newly defined F1AP message instead of the UE CONTEXT RELEASE COMMAND message, and/or a DL RRC MESSAGE TRANSFER message and the PUR configuration indication may be used together.

The CU-CP may command the UE to use a security key through the MAC layer when configuring PUR transmission without using an RRC message while allocating PUR configuration.

In step S1315, the DU may deliver the RRC release message received from the CU-CP to the UE.

In step S1317, if the PUR configuration indication is included in the UE context release command (UE CONTEXT RELEASE COMMAND) message, the DU may respond to the CU-CP with a UE CONTEXT RELEASE COMPLETE message without clearing the UE context and leaving the UE context in a suspended state.

In step S1319, the UE may transition to the RRC-INACTIVE state according to the RRC release message received in step S1315. In addition, the internal configuration of the UE can be configured according to the PUR configurations.

According to the embodiment, the CU-CP may allocate PUR configurations to the UE. In addition, the CU-CP pre-configures the DU or CU-UP how to behave when the UE attempts SDT transmission without using an RRC message as shown in FIG. 16, so that UP data can be quickly delivered to the UE or 5GC. Through this, the UE can maintain the RRC-INACTIVE state again after quickly completing data transmission, and unnecessary energy consumption can be prevented.

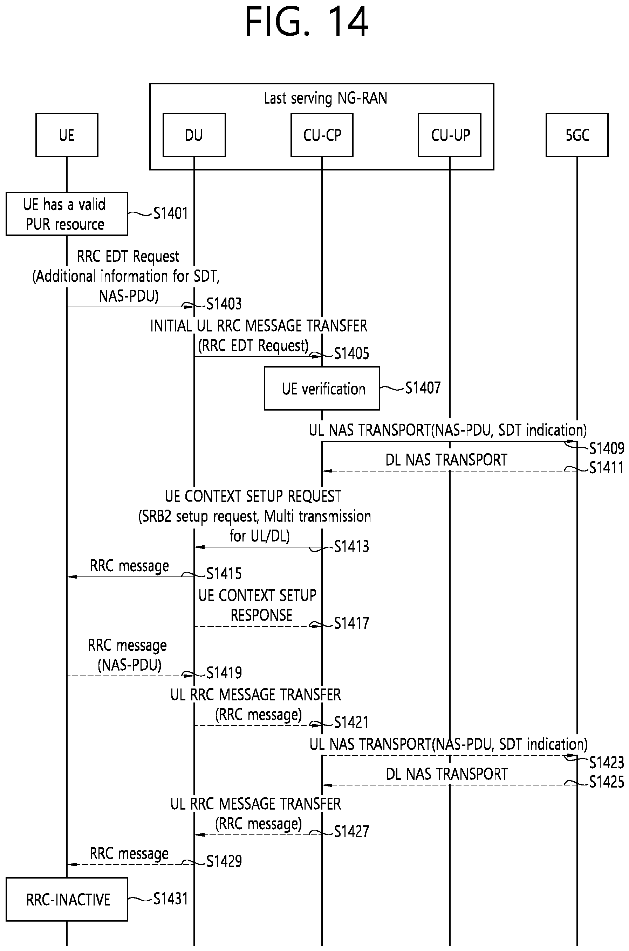

FIG. 14 shows an example of a transmission procedure using PUR of CP small data in an inactive state according to an embodiment of the present disclosure. FIG. 12 shows a method of allocating multiple UL/DL transmissions by a CU-CP when a UE uses PUR to transmit small data based on a control plane in the RRC-INACITVE state.

Referring to FIG. 14 , in step S1401, the UE is currently in the RRC-INACTIVE state. Therefore, the UE and the last serving base station each store the UE context. The NG-C connection between CU-CP and AMF is maintained, and the NG-U connection between CU-UP and UPF is also maintained.

In addition, in the process of the UE transitioning to the RRC-INACTIVE state, the UE is in a state of receiving the PUR configuration from the last serving base station, and since the UE is in the state of staying at the last serving base station, it has valid PUR resources.

In step S1403, if UE data exists, the UE may attempt data transmission according to the previously received PUR configuration. The UE may generate an RRC early data transmission (EDT) request message including an I-RNTI, cause for RRC resumption (e.g., for small data transmission in RRC_INACTIVE), authentication token (e.g. resume MAC-I), and/or NAS-PDU (including UL data), and transmit the RRC early data transmission request message on the CCCH.

In addition, the UE may include additional information for SDT (i.e., Additional information for SDT) in the RRC message. Additional information for SDT may include at least one of the following:
- expected UL data size;
- buffer status report (BSR);
- Traffic pattern;
- Preference for state transition to RRC_CONNECTED; and/or
- Indication of multiple UL transmissions without transitioning to RRC CONNECTED (e.g., the UE has a single UL data packet with a size greater than TBS of Msg3/MsgA, and/or the UE has multiple UL data packets each of which packet size is smaller than TBS of Msg3/MsgA). For multiple UL transmissions, the indication for multiple UL transmissions may comprise the number of requested UL allocation occasions (for PUSCH resource), requested TBS, period of requested UL allocation occasions (for PUSCH resource) and/or a time offset until the initial UL allocation (for PUSCH resources). The indication for multiple UL transmissions may also include the number of UL RRC messages expected or requested to transmit UL data packets.

In addition, the UE may transmit AS-Release Assistance information to the DU. For example, the UE may transmit AS-release assistance information to the DU through an RRC EDT request message. As another example, the UE may transmit AS-release assistance information to the DU through a BSR or MAC CE or RRC message. AS-release assistance information may include at least one of the following:
- there is no more UL/DL data transmissions; and/or
- there is only a single DL data transmission following the UL transmission.

In step S1405, the DU may transfer the RRC message received from the UE to the CU-CP using an INITIAL UL RRC MESSAGE TRANSFER message. In addition, if the AS-RAI is transmitted through the MAC CE in step S1403, the DU may include the corresponding information in the INITIAL UL RRC MESSAGE TRANSFER message and transmit it.

In step S1403, the UE may transmit additional information for SDT (i.e., Additional information for SDT) using MAC CE. In this case, the DU can know that the UE needs multiple UL transmissions for UL data transmission. However, since the DU cannot decide whether to allow multi-UL transmission while maintaining the RRC-INACTIVE state or whether to transition to the RRC-CONNECTED state, the DU informs the CU-CP of the corresponding information using the INITIAL UL RRC MESSAGE TRANSFER message.

Alternatively, in order to omit the process of asking the CU-CP whether or not to allow multiple UL transmissions, the CU-CP configures to the DU in advance the conditions under which the DU can allow multi-UL transmissions without the permission of the CU-CP in step S1305 of FIG. 13. For example, the CU-CP may pre-configure the total size of UL data transmittable through multiple UL transmissions, the total number of transmissions of UL data transmittable through multiple UL transmissions, and/or the traffic pattern of the UE to the DU in advance. In this case, the process for the DU to ask the CU-CP whether or not to allow the multi-UL transmissions in S 1405 of FIG. 14 can be omitted.

In step S1407, the CU-CP may check whether the UE context can be found. Based on the I-RNTI, the CU-CP can find the UE context in the suspended state within the CU-CP, and can check whether the UE context can be resumed, and/or whether the UE is verified by the authentication token (e.g., resume MAC-I).

After verifying the UE, the CU-CP determines whether the UE can use the SDT or a state transition to RRC-CONNECTED is required based on RAI, additional information for SDT (i.e., Additional information for SDT), UE subscription information received from 5GC, and/or traffic patterns. In particular, when receiving a multiple UL transmission request from the UE, the CU-CP may determine whether to allow the multiple UL transmission request or to transition the UE to the RRC-CONNECTED state.

Also, the CU-CP can check whether there is DL data to be delivered from 5GC to the UE and whether multiple DL transmissions are required.

In step S1409, the CU-CP may deliver a NAS-PDU including UL data to the AMF using a UL NAS TRANSPORT message. In addition, the CU-CP may notify the AMF that small data is being transmitted while maintaining the RRC-INACTIVE state by including the SDT indicator in the UL NAS transfer message. Based on the RAI and/or additional information for SDT received from the UE (i.e., Additional information for SDT), the CU-CP may inform the AMF whether there is subsequent UL/DL data transmission.

In this process, the CU-CP may request AMF to allocate a new security context (i.e., Next-hop chaining count, Next-hop NH) for use in the next RRC state transition process.

In step S1411, if it is necessary to transmit a DL data packet to the UE following the UL data received in step S1409, the AMF transmits a NAS-PDU to the CU-CP using a DL NAS TRANSPORT message. If the AMF determines that there is no more UP data to be exchanged with the UE, an end indication may be added to the DL NAS TRANSPORT message and transmitted.

If there is no DL data to be delivered to the UE, but the AMF wants the UE to stay in the RRC-CONNECTED state, the AMF sends a STATE TRANSITION REQUIRED message to the CU-CP to request the CU-CP to transit to the RRC-CONNECTED state.

In step S1409, when there is a request from the CU-CP, or based on an indication that the UE has executed the current SDT, or based on subscription information of the UE, the AMF may allocate a new security context for the UE, and it can be delivered to the CU-CP using a DL NAS TRANSPORT message or a STATE TRANSITION REQUIRED message.

In step S1413, when the AMF transmits the NAS-PDU including DL data in step S1411, the CU-CP may include the NAS-PDU in the RRC message and deliver it to the DU. At this time, when there is no further UP data transmission and the UE remains in the RRC-INACTIVE state, an RRC EDT complete (COMPETE) message may be used. If multiple UL/DL transmissions are required, an RRC message (e.g., a UL information transfer message and/or a DL information transfer message) may be used or a new RRC message (via SRB 1) may be used.

When the CU-CP determines that transmission of multiple UL data from the UE or transmission of multiple DL data from the 5GC is necessary, the CU-CP may include the "multiple transmission for UL/DL" indicator in the F1AP message sent to the DU and transmit it to the DU. The "multiple transmission for UL/DL" indicator includes information necessary for dividing and transmitting UP data several times, that is, the number of configured UL/DL allocation occasions, the configured TBS, and/or the number of expected UL/DL RRC messages.

If multiple UL transmissions from the UE or multiple DL data transmissions from the 5GC are performed based on SRB2 (e.g., UL information transfer message or DL information transfer message), the CU-CP transmits a UE CONTEXT SETUP REQUEST message to the DU to request SRB2 generation for SDT transmission.

In step S1411, when the AMF requests a transition to the RRC-CONNECTED state, an RRC resume message instructing the UE to transition to the RRC-CONNECTED state is generated and is transferred to the UE using the F1 UE CONTEXT SETUP REQUEST message.

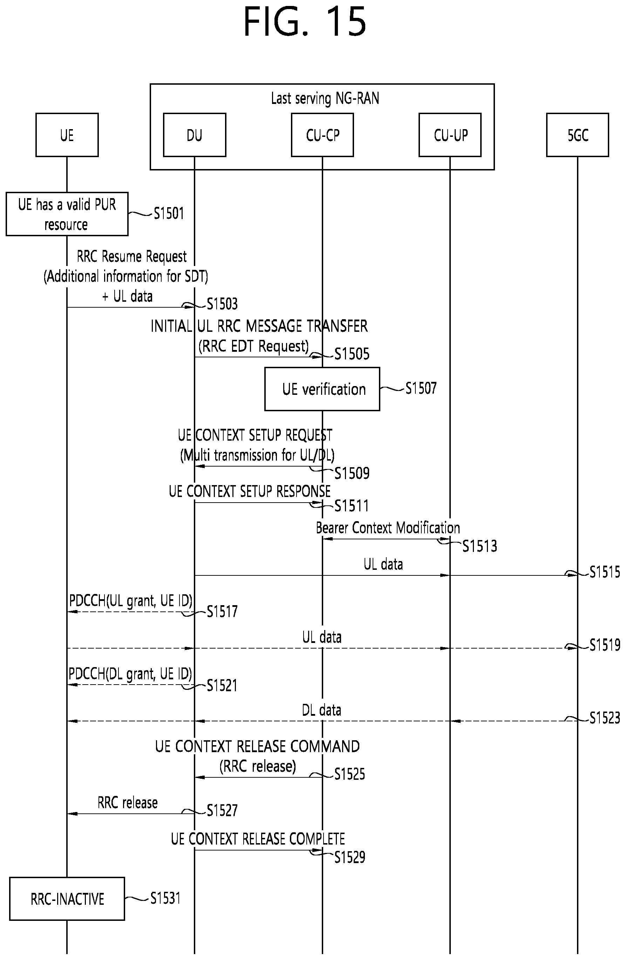

When multiple UL transmissions from UE or multiple DL data transmissions from 5GC are exchanged between CU-UP and DU using an F1-U tunnel rather than SRB2, the process illustrated in FIG. 15 or 16 can be used..

Alternatively, when multiple UL transmissions from the UE or multiple DL data transmissions from the 5GC are performed using SRB1 instead of SRB2, a DL RRC MESS SAGE TRANSFER message may be used instead of the UE CONTEXT SETUP REQUEST message.

Instead of the CU-CP transmitting the "multiple transmission for UL/DL" indication including information necessary to divide and transmit UP data several times, that is, the number of configured UL/DL allocation occasions, configured TBS, and/or the number of expected UL/DL RRC messages, the CU-CP may inform the DU that only the corresponding operation is required through the "multiple transmission for UL/DL" indicator, and the DU may configure the value necessary for the UE by itself in consideration of the radio resource situation..

Using the RRC message, the CU-CP may notify the UE that multiple transmission for UL/DL is permitted and configuration for UL/DL multiple transmission is assigned. Alternatively, after step S1413, the DU may inform the UE that the configuration for UL/DL multiple transmission is allocated using the MAC CE.

In step S1415, the DU may transmit the RRC message received in step S1413 to the UE. If the UE context configuration request message received in step S1413 includes the "multiple transmission for UL/DL" indicator, it can be known that the DU needs to additionally allocate several resources to the UE for UP data transmission. Accordingly, the DU may multiplex and transmit the RRC message and the contention resolution ID in the same MAC PDU for multiple UL/DL transmissions.

In step S1417, the DU generating the UE context as requested by the CU-CP in step S1413 may respond using a UE context configuration response (CONTEXT SETUP RESPONSE) message.

In step S1419, in order to transmit multiple UL data packets, the UE may put the UL data packets in an RRC message and transmit the RRC message to the DU.

In step S1421, the DU may transfer the RRC message to the CU-CP using a UL RRC message transfer (MESSAGE TRANSFER) message.

In step S1423, the CU-CP may deliver a NAS-PDU including UL data to the AMF using a UL NAS TRANSPORT message. In addition, the CU-CP may add the SDT indicator to the UL NAS transmission message to inform the AMF that small data is being transmitted while maintaining the RRC-INACTIVE state.

In step S1425, if it is necessary to transmit a single DL data packet to the UE following the UL data received in step S1423, the AMF may transmit a NAS-PDU to the CU-CP using a DL NAS TRANSPORT message . If the AMF determines that there is no more UP data to be exchanged with the UE, the AMF may transmit an end marker by adding it to the DL NAS TRANSPORT message.

In step S1427, if there is no more UP data to be transmitted, the CU-CP generates an RRC EDT complete message to release the RRC connection and transmit the RRC EDT complete message to the DU by using a DL RRC MESSAGE TRANSFER or UE CONTEXT release command (RELEASE COMMAND) message.

If the AMF transmits the end marker together with the NAS-PDU including DL data in step S1425, the CU-CP may include the end marker in the RRC EDT complete message and deliver it to the DU.

If multiple UL/DL transmissions are required, an existing RRC message (e.g., a UL information transfer message and a DL information transfer message) may be used or a newly defined RRC message (RRC message transmitted through SRB 1) may be used.

The CU-CP may use L1 ACK or MAC CE instead of the RRC EDT complete message in step S1415 or step S1429 to inform the UE that there is no more data or signaling to be transmitted as determined in the process of FIG. 13. However, since only DUs can transmit L1 ACK or MAC CE, CU-CP adds a new indicator in the UE CONTEXT RELEASE COMMAND message to inform the UE that there is no more data or signaling to be transmitted or sends a new F1AP message to inform the DU to transmit L1 Ack or MAC CE to the UE. Alternatively, after the last UP data transmission, the DU itself may run a timer and transmit an L1 ACK or MAC CE to the UE when the timer expires. Alternatively, if the DU determines that there will be no further UP data transmission based on the contents preconfigured from the CU-CP in step S1311 of FIG. 13, the DU may determine RRC connection release. In this case, in step S1415 or step S1429, the DU may notify the UE that the SDT in the RRC-INACTIVE state has ended through an L1 layer ACK or MAC CE instead of the RRC message.

When a DU transmits L1 ACK or MAC CE to the UE, a Time Advance Adjustment (TA) or TA command may be included in the L1 ACK and/or MAC CE to update the TA.

The CU-CP may generate the RRC EDT complete message after step S1411 instead of step S1427, and in this case, the first DL data may be delivered to the UE together with the RRC EDT complete message. If multiple UL/DL data transmissions remain after that, steps S1419 to S1429 may proceed.

In step S1429, the DU may deliver an RRC release message to the UE.

In step S1431, the UE that has received the RRC release message remains in the RRC INACTIVE state.

According to the embodiment, the CU-CP may request the DU to allocate resources required for multi-UL/DL transmissions of the UE. Through this, since the UE can be prevented from transitioning to the RRC-CONNECTED state to transmit UP data, unnecessary signaling between the UE and the base station can be prevented.

FIG. 15 shows an example of a transmission procedure using PUR together with an RRC message for UP small data in an inactive state according to an embodiment of the present disclosure. FIG. 15 shows a method in which the CU-CP allocates multiple UL/DL transmissions when the UE uses PUR to transmit UP-based small data in RRC-INACITVE state. This embodiment is based on a method in which a UE multiplexes and transmits UP data together with an RRC message in a MAC layer.

Referring to FIG. 15 , in step S1501, the UE is currently in an RRC-INACTIVE state. Therefore, the UE and the last serving base station each store the UE context. The NG-C connection between CU-CP and AMF is maintained, and the NG-U connection between CU-UP and UPF is also maintained.

In addition, the UE has received PUR configuration from the last serving base station in the process of transitioning to the RRC-INACTIVE state, and has valid PUR resources because it is currently staying at the last serving base station.

In step S1503, if UL data exists, the UE may attempt data transmission according to the previously received PUR configuration. If the PUR configuration received in FIG. 13 is configured to transmit UL data using an RRC message, the UE first generates RRC resume request message including the I-RNTI, RRC resumption cause (for small data transmission in RRC-INACTIVE), and/or authentication token (e.g., resume MAC-I) and attempts to resume the RRC connection. At this time, the UL data is transmitted through DTCH and can be multiplexed in the MAC layer together with the RRC message transmitted through CCCH.

In addition, the UE may include additional information for SDT (i.e., Additional information for SDT) in the RRC message. Additional information for SDT may include at least one of the followings:
- expected UL data size;
- buffer status report (BSR);
- Traffic pattern;
- Preference for state transition to RRC_CONNECTED; and/or
- Indication of multiple UL transmissions without transitioning to RRC_CONNECTED (e.g., the UE has a single UL data packet with a size greater than TBS of Msg3/MsgA, and/or the UE has multiple UL data packets each of which packet size is smaller than TBS of Msg3/MsgA). For multiple UL transmissions, the indication for multiple UL transmissions may comprise the number of requested UL allocation occasions (for PUSCH resource), requested TBS, period of requested UL allocation occasions (for PUSCH resource) and/or a time offset until the initial UL allocation (for PUSCH resources). The indication for multiple UL transmissions may also include the number of UL RRC messages expected or requested to transmit UL data packets.

In addition, the UE may transmit AS-Release Assistance information to the DU. For example, the UE may transmit AS-release assistance information to the DU through an RRC EDT request message. As another example, the UE may transmit AS-release assistance information to the DU through a BSR or MAC CE or RRC message. AS-release assistance information may include at least one of the following:
- there is no more UL/DL data transmissions; and/or
- there is only a single DL data transmission following the UL transmission.

In step S1505, if the DU releases the UE context in the process of the UE transitioning to RRC-INACTIVE, the DU may transfer the RRC message to the CU-CP using an INITIAL UL RRC MESSAGE TRANSFER message. In addition, if the AS-RAI is transmitted through the MAC CE in step S1503, the DU may include the AS-RAI in the INITIAL UL RRC MESSAGE TRANSFER message and transmit it.

In step S1503, the UE may transmit additional information for SDT (i.e., Additional information for SDT) using MAC CE. In this case, the DU can know that the UE needs multi-UL transmissions for UL data transmission. However, since the DU cannot decide whether to allow multi-UL transmission while maintaining the RRC-INACTIVE state or to transition to the RRC-CONNECTED state, the DU uses the INITIAL UL RRC MESSAGE TRANSFER message to inform to the CU-CP that multiple UL transmission are required for the UE to transmit UL data.

Alternatively, in order to omit the process of asking the CU-CP whether to allow multiple UL transmissions, the CU-CP may preconfigure conditions in the DU to permit multiple UL transmissions without permission from the CU-CP in step S1305 of FIG. 13. For example, the CU-CP may preconfigure the total size of UL data transmittable through multiple UL transmissions, the total number of transmissions of UL data transmittable in multiple UL transmissions, and/or the traffic pattern of the UE to the DU. In this case, the process of asking the CU-CP whether or not the multiple UL transmissions are allowed for the DU in step S1505 of FIG. 15 may be omitted.

If, in the process of the UE transitioning to RRC-INACTIVE, if the DU has suspended the UE context based on the PUR configuration indication, the UL RRC MESSAGE TRANSFER message may be used instead of the INITIAL UL RRC MESSAGE TRANSFER message.

If the DU can identify the UE that sent the RRC message, it is also possible for the DU to resume and use the UE context suspended in the DU. To this end, the DU must be able to distinguish the UE. For example, when configuring PUR, DU pre-allocates different resources for each UE, and then distinguishes UEs through resources used by the UE for UL data transmission, or through separate UE IDs on MAC CE that is transmitted together when the UE sends an RRC message. Alternatively, after the DU delivers the RRC message to the CU-CP, the UE context for the UE notified by the CU-CP may be resumed in step S1509.

In step S1507, the CU-CP may check whether the UE context can be found. For example, CU-CP can find UE context in suspended state, resume UE context, and/or send security token (e.g., resume MAC-I) to CU-CP based on I-RNTI. Through this, it is possible to check whether the UE is verified.

After verifying the UE, the CU-CP determines whether the UE can use SDT based on RAI, additional information for SDT (i.e., Additional information for SDT), UE subscription information received from 5GC, and/or traffic patterns. Alternatively, it may be checked whether a state transition to RRC-CONNECTED is required. In particular, when receiving a multiple UL transmission request from the UE, the CU-CP may determine whether to allow multiple UL transmissions or to transition the UE to the RRC-CONNECTED state.

In addition, the CU-CP can check whether there is DL data to be delivered from 5GC to the UE and whether multiple DL transmissions are required.

In step S1509, the CU-CP may request UE context generation for SDT transmission by sending a UE CONTEXT SETUP REQUEST message to the DU. At this time, the CU-CP may notify the DU through a multiple transmission indicator for UL/DL when multiple UL transmissions from the UE or multiple DL data transmissions from the 5GC are required while leaving the UE in the RRC-INACTIVE state. The multiple transmission indicator for UL/DL may include information necessary for dividing and transmitting UP data several times, that is, the number of configured UL/DL allocation occasions, the configured TBS, and/or the number of expected UL/DL RRC messages.

If, as in step S1313 of FIG. 13, in the process of the UE transitioning to RRC-INACTIVE, if the DU suspends the UE context based on the PUR configuration indication, the CU-CP may transmit UE CONTEXT MODIFICATION REQUEST message including a resume indicator to the UE instead of the UE CONTEXT SETUP REQUEST message. In this case, the DU can resume the suspended UE context.

Instead of the CU-CP transmitting the "multiple transmission for UL/DL" indication including information necessary for the CU-CP to divide and transmit UP data several times, that is, the number of configured UL/DL allocation occasions, configured TBS, and/or the number of expected UL/DL RRC messages, the DU may inform the DU that only the corresponding operation is required through the "multiple transmission for UL/DL" indicator, and the DU may configure the value necessary for the UE by itself in consideration of the radio resource situation..

In step S1511, the DU generating the UE context as requested by the CU-CP in step S1509 may respond to the CU-CP using a UE CONTEXT SETUP RESPONSE message. If the "multiple transmission for UL/DL" instruction is received in step S1509, it can be known that the DU needs to additionally allocate several resources to the UE for UP data transmission.

In step S1513, the CU-CP may notify the CU-UP that the UE is attempting SDT while maintaining the RRC-INACTIVE state through a bearer context modification procedure. Through this, after the CU-UP resumes the UE context, when receiving UL data from the DU, the DL data can be decoded and transmitted to the 5GC.

In step S1515, the DU may deliver UL data to the CU-UP, and the CU-UP may decode the UL data and deliver the UL data to the 5GC.

CU-UP may add an indication to the received UL data to inform 5GC that it is SDT while maintaining RRC-INACTIVE. Upon receiving the UL data including the corresponding indication, the UPF may inform the AMF that the SDT has been attempted while the UE maintains RRC-INACTIVE.

Alternatively, by using a new NGAP message, the CU-CP may inform the AMF that the SDT has been attempted while the UE maintains RRC-INACTIVE, and may also inform whether there will be continuous UL data transmission.

When using the default RLC bearer setup for SDT, the DU and CU may exchange F1-U tunnel related information in advance through an F1 setup procedure. In this case, the DU can directly transmit UL data to the CU-UP without receiving a new UE context from the CU-CP or resuming the existing UE context.

Alternatively, as in step S1313 of FIG. 13, when the DU is in a state in which the UE context is suspended based on the PUR configuration indication in the process of the UE transitioning to RRC-INACTIVE, if the DU recognizes the corresponding UE in step S1505 of FIG. 15 and the UE context can be immediately resumed, UL data can be delivered to the CU-UP immediately after step S1505. If, in step S1311 of FIG. 13 , for fast data transmission, the CU-CP configured a related operation to the CU-UP in advance (e.g., immediately encrypts/decrypts and transmits the UP data without involvement of the CU-CP), the UL data can be transmitted to 5GC immediately after being decoded in CU-UP.

In step S1517, if the DU receives the indication that "multiple transmission for UL" is required in step S1509, the DU may transmit a PDCCH including a UL grant and UE ID (e.g., I-RNTI, C-RNTI) to the UE. In this step, the DU can simultaneously allocate several UL/DL grants to the UE.

In step S1519, the UE may transmit multiple UL data packets based on the UL allocation received in step S1517, and the base station may transmit the multiple UL data packets to the 5GC after receiving them.

In step S1521, when receiving an indication that "multiple transmission for DL" is required in step S1509, the DU may transmit a PDCCH including DL grant and UE ID (e.g., I-RNTI, C-RNTI) to the UE.

The first or last DL data packet delivered to the UE is transmitted through the DTCH, and may be multiplexed and transmitted in the MAC layer together with the RRC message transmitted through the DCCH.

In step S1523, the UE may receive DL data from the 5GC through the base station according to the DL grant received in step S1521.

AMF may add an indicator indicating whether DL data is continuously transmitted to DL data to be delivered to CU-UP. Upon receiving the DL data including the corresponding indicator, the CU-UP may inform the CU-CP of whether or not the DL data is continuously transmitted (e.g., by transferring the indicator to the CU-CP). Alternatively, the AMF may inform the CU-CP of whether DL data is continuously transmitted using a new NGAP message. Based on whether DL data is continuously transmitted, the CU-CP may determine transition to the RRC-CONNECTED state when DL data transmission continues.

DL data may reach CU-UP from UPF after step S1515. In this case, the DL data may be transmitted to the UE together with the RRC message or delivered to the UE according to steps S1521 and/or S1523.

In step S1525, if there is no more UP data to be transmitted, the CU-CP generates an RRC release message to release the RRC connection and sends the RRC release message to the DU using a DL RRC message transfer (MESSAGE TRANSFER) or UE context release command (CONTEXT RELEASE COMMAND) message.

The CU-CP may generate the RRC release message after step S1515 instead of step S1525, and in this case, the RRC release message may be multiplexed together with the first DL data in the MAC layer and delivered to the UE. If multiple UL/DL data transmissions remain after that, steps S1517 to S1523 may proceed.

In step S1527, the DU may deliver the RRC message to the UE.

In step S1529, if the UE context release command (CONTEXT RELEASE COMMAND) message is received in step S1525, the DU may respond to the UE context release command message by sending a UE context release complete (CONTEXT RELEASE COMPLETE) message.

In step S1531, the UE that has received the RRC release message remains in the RRC INACTIVE state.

FIG. 16 shows an example of a transmission procedure using PUR without an RRC message for UP small data in an inactive state according to an embodiment of the present disclosure. FIG. 16 shows how the CU-CP allocates multiple UL/DL transmissions when the UE uses PUR to transmit user plane-based small data in RRC-INACITVE state. This embodiment is based on a method in which a UE transmits only a UE ID and user plane data to a base station without an RRC message.

Referring to FIG. 16, in step S1601, the UE is currently in the RRC-INACTIVE state. Therefore, the UE and the last serving base station each store the UE context. The NG-C connection between CU-CP and AMF is maintained, and the NG-U connection between CU-UP and UPF is also maintained.

In addition, the UE has received PUR configuration from the last serving base station in the process of transitioning to the RRC-INACTIVE state, and has valid PUR resources because it is currently staying at the last serving base station.

In step S1603, if UL data exists, the UE may attempt data transmission according to the previously received PUR configuration. If the PUR configuration received in the process of FIG. 13 is configured to transmit UL data without using an RRC message, the UE may transmit UL data together with the UE ID to the base station through the PUR resource.

In addition, the UE may transmit additional information for SDT (i.e., Additional information for SDT) through the MAC CE. Additional information for SDT may include at least one of the followings:
- expected UL data size;
- buffer status report (BSR);
- Traffic pattern;
- Preference for state transition to RRC_CONNECTED; and/or
- Indication of multiple UL transmissions without transitioning to RRC_CONNECTED (e.g., the UE has a single UL data packet with a size greater than TBS of Msg3/MsgA, and/or the UE has multiple UL data packets each of which packet size is smaller than TBS of Msg3/MsgA). For multiple UL transmissions, the indication for multiple UL transmissions may comprise the number of requested UL allocation occasions (for PUSCH resource), requested TBS, period of requested UL allocation occasions (for PUSCH resource) and/or a time offset until the initial UL allocation (for PUSCH resources). The indication for multiple UL transmissions may also include the number of UL RRC messages expected or requested to transmit UL data packets.

In addition, the UE may transmit AS-Release Assistance information to the DU. For example, the UE may transmit AS-release assistance information to the DU through an RRC EDT request message. As another example, the UE may transmit AS-release assistance information to the DU through a BSR or MAC CE or RRC message. AS-release assistance information may include at least one of the following:
- there is no more UL/DL data transmissions; and/or
- there is only a single DL data transmission following the UL transmission.

If the UE in FIG. 13 is requested to use a security key in the MAC layer from the base station, the UE can generate a security key in the MAC layer and transmit the security key together with UL data and a UE ID.

In step S1605, if the DU suspends the UE context while the UE transitions to RRC-INACTIVE, the DU identifies the UE through the UE ID received in step S1603 or through resources allocated differently for each UE, or through another method.

After the verification of the UE is completed, based on the RAI, additional information for SDT (i.e., Additional information for SDT), the UE's subscription information received through CU-CP, and/or traffic patterns, the DU may check if SDT is available for the UE or if a state transition to RRC-CONNECTED is required. In particular, when receiving a multiple UL transmission request from the UE, the DU may determine whether to allow multi-UL transmission or to transition the UE to the RRC-CONNECTED state based on the configuration of the CU-CP. Also, based on the traffic pattern and/or RAI, the DU can check whether there is DL data to be delivered to the UE and whether multiple DL transmissions are required.

In step S1603, since the DU receives information additionally transmitted for SDT (i.e., Additional information for SDT) using the MAC CE, the DU knows that the UE needs multiple UL transmissions for UL data transmission. However, since the DU cannot decide whether to allow multiple UL transmissions while maintaining the RRC-INACTIVE state or to transition to the RRC-CONNECTED state, the CU-CP may configure information necessary for dividing and transmitting the UP data in several times, that is, the number of configured UL/DL allocation occasions, the configured TBS, and/or the number of expected UL/DL RRC messages in advance for a case where multiple UL transmissions from the UE or multiple DL transmissions from 5GC are necessary. The DU may perform multiple DL grants or UL grants to the UE using at least one of conditions configured by the CU-CP or additional information for SDT received from the UE or may inform to the CU-CP that transmission to the RRC_CONNECTED state is required.

If, in step S1605 of FIG. 13 , the base station requests to use a security key in the MAC layer, the DU can generate a security key and compare it with the security key received from the UE to identify the UE.

If, in step S1605 of FIG. 13, a request is received from the CU-CP to notify the CU-CP of UL data transmission for PUR transmission that does not use an RRC message, the DU may inform the arrival of data to the CU-CP using the F1AP message before step S1607. In this process, if the AS-RAI is transmitted through the MAC CE in step S1603, the DU may transmit the corresponding information (= AS-RAI) together with the F1AP message.

In step S1607, the DU may deliver UL data to the CU-UP based on the resumed UE context.

In step S1609, the CU-UP may operate according to the configuration from the CU-CP in step S1311 of FIG. 13. For example, if CU-CP configures CU-UP that it is possible to transmit UL data to 5GC after decoding UL data using an existing security key, CU-UP can decode UL data received from DU. To this end, the CU-UP may use the security key used before transitioning to the RRC-INACTIVE state after resuming the UE context.

If, when UL data arrives in step S1311 of FIG. 13, if the CU-CP has previously made a request to inform the CU-UP of the arrival of the UL data, the CU-UP may notify the CU-CP of the arrival of the UL data.

In step S1611, the UL data decoded by CU-UP in step S1609 may be delivered to 5GC.

CU-UP may add an indicator to the received UL data to inform 5GC that it is SDT in the state of maintaining RRC-INACTIVE. Upon receiving the UL data including the corresponding indicator, the UPF may inform the AMF that the SDT was attempted while the UE maintained RRC-INACTIVE.

Or, using a new NGAP message, CU-CP can inform AMF that the UE has attempted SDT while maintaining RRC-INACTIVE, and CU-CP can inform AMF whether there will be continuous UL data transmission..

In step S1613, if it is determined in step S1605 that "multiple transmission for UL" is necessary, the DU may transmit a PDCCH including UL assignment and UE ID (e.g., I-RNTI, C-RNTI) to the UE. A DU may simultaneously allocate several UL/DL assignments to a UE.

In step S1615, the UE transmits a plurality of UL data packets based on the UL allocation received in step S1613, and the base station may transmit the plurality of UL data packets to the 5GC after receiving them.

In step S1617, if it is determined in step S1605 that "multiple transmission for DL" is necessary, the DU may transmit a PDCCH including DL assignment and UE ID (eg, I-RNTI, C-RNTI) to the UE.

In step S1619, the UE may receive DL data from the 5GC through the base station according to the DL assignment received in step S1617.

AMF may add an indicator indicating whether DL data is continuously transmitted to DL data to be delivered to CU-UP. Upon receiving the DL data including the corresponding indicator, the CU-UP may deliver to the CU-CP whether or not the DL data is continuously transmitted. Alternatively, the AMF may inform the CU-CP of whether DL data is continuously transmitted using a new NGAP message. Based on whether DL data is continuously transmitted, the CU-CP may determine transition to the RRC-CONNECTED state when DL data transmission continues.

DL data may reach CU-UP from UPF after step S1615. In this case, the DL data may be transmitted to the UE together with the RRC message or delivered to the UE according to steps S1621 and S1623.

In step S1621, if there is no more UP data to be transmitted, the CU-CP generates an RRC release message to release the RRC connection and send the RRC release message to the DU using a DL RRC message transfer (MESSAGE TRANSFER) or UE context release command (CONTEXT RELEASE COMMAND) message.

In step S1623, the DU may deliver an RRC message to the UE.

Although the CU-CP may determine to release the RRC connection in step S1621, if the DU determines that there will be no more UP data transmission based on the contents preconfigured from the CU-CP in step S1311 of FIG. 13, the DU may decide to release the RRC connection. In this case, in step S1623, the DU may notify the UE that the SDT in the RRC-INACTIVE state has ended through the MAC CE instead of the RRC message. In this case, steps S1621 and S1625 may be omitted.

In step S1625, if the UE CONTEXT RELEASE COMMAND message is received in step S1621, the DU may respond by sending a UE CONTEXT RELEASE COMPLETE message.

In step S1627, the UE receiving the RRC release message remains in the RRC INACTIVE state.

According to the embodiments illustrated in FIGS. 15 and 16, the CU-CP may request resource allocation required for multiple UL/DL transmissions of the UE to the DU. Through this, since the UE can be prevented from transitioning to the RRC-CONNECTED state to transmit UP data, unnecessary signaling between the UE and the NG-RAN can be prevented. In addition, as shown in FIG. 16, since the UE can transmit only the UE ID and UP data without an RRC message, faster data transmission may be possible.

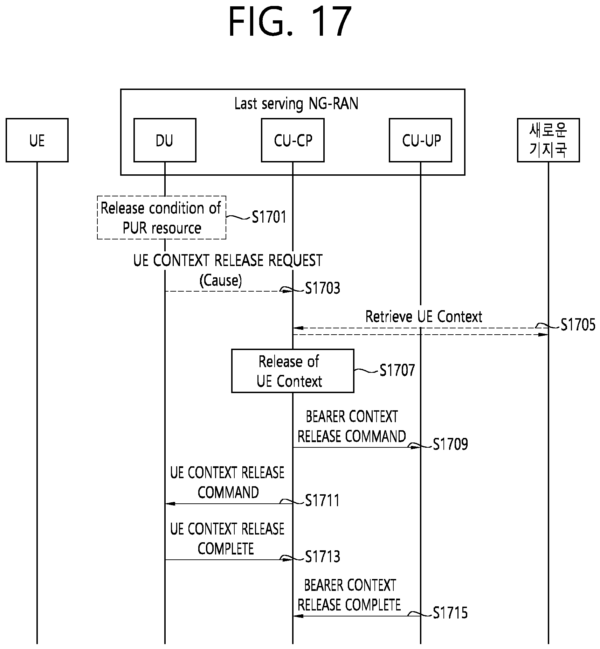

FIG. 17 shows a PUR configuration release procedure according to an embodiment of the present disclosure. FIG. 17 suggests a method of releasing the PUR configuration when the PUR configuration allocated to the UE is no longer valid.

Referring to FIG. 17, in step S1701, if the DU knows that the UE has moved out of the cell where the PUR configuration has been received and has moved to another cell or base station, or if the UE has not transmitted UL data for several PUR occasions , or when the TA timer (or a timer performing an equivalent function) allocated to the UE by the DU expires, the DU may determine to release the PUR configuration allocated to the UE.

In step S1703, the DU may request PUR configuration and/or UE context release by sending a UE CONTEXT RELEASE REQUEST message including a cause value to the CU-CP. At this time, since the PUR configuration previously allocated to the UE is no longer valid, a new cause value may be defined and used to notify the CU-CP that the PUR configuration and/or information related to the PUR configuration should be released.

Even if the PUR operation is no longer supported in the corresponding cell, the DU should inform the release the PUR configuration and/or information related to the PUR configuration to the CU-UP through a UE CONTEXT RELEASE REQUEST message or an F1 GNB-DU CONFIGURATION UPDATE message or a new message. In this case, all UEs that have received PUR configuration in the corresponding cell cannot transmit SDT through PUR, and the PUR configuration may no longer be valid. Therefore, the DU must inform the CU-CP of the list of UEs for which PUR configuration is not valid.

In step S1705, when the UE makes an RRC connection resumption request through another base station, the new base station may request a UE context from the last serving base station using a UE context acquisition procedure (Retrieve UE Context procedure). In this case, since the UE is out of the cell in which the PUR resource was configured, the CU-CP needs to release the PUR configuration for the UE.

In step S1707, the CU-CP may determine to release the UE context when the CU-CP identifies that the PUR configuration must be released by step S1701 or step S1705, or the RNA timer for the UE expires, or determines not to leave the UE in the RRC-INACTIVE state any longer and to transit the UE to the RRC-IDLE state.

In step S1709, the CU-CP may inform the CU-UP of UE context release using a BEARER CONTEXT RELEASE COMMAND message. At this time, if the BEARER CONTEXT RELEASE COMMAND message is sent because the PUR configuration is no longer valid by step S1701 or step S1705, the CU-CP may include the cause value used in step S1701 in the BEARER CONTEXT RELEASE COMMAND and transmit it together.

If the UE context release starts because the PUR operation is no longer supported in the corresponding cell, the CU-CP may start bearer context release procedures with CU-UP or UE context release procedures with DU for the UEs included in the list of UEs received in step S1701 (i.e., the list of UEs configured with PUR in the corresponding cell).

In step S1711, the CU-CP may inform the DU of UE context release using the UE CONTEXT RELEASE COMMAND message. At this time, if the UE CONTEXT RELEASE COMMAND message is sent because the PUR configuration is no longer valid by step S1701 or step S1705, the CU-CP may include the cause value used in step S1701 in the UE CONTEXT RELEASE COMMAND message and transmit it together.

If the UE is still in the RRC-CONNECTED state, the CU-CP may notify the UE of PUR configuration release through an RRC release message.

In step S1713, the DU may respond to the CU-CP by sending a UE CONTEXT RELEASE COMPLETE message.

In step S1715, the CU-UP may respond to the CU-CP by sending a BEARER CONTEXT RELEASE COMPLETE message.

According to this embodiment, the DU and/or CU-CP may release resource allocation related to the PUR configuration as soon as it knows that the PUR configuration allocated to the UE is no longer valid, thereby unnecessary resource waste can be prevented.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method performed by a distributed unit (DU) of a base station in a wireless communication system, the method comprising:
receiving, from a central unit (CU) of the base station, configuration information for performing multiple transmissions of small data with a wireless device in an inactive state;
based on the configuration information, determining a plurality of resources for the multiple transmissions in the inactive state;
transmitting, to the wireless device, resource information informing the plurality of resources; and
performing the multiple transmissions of small data with the wireless device in the inactive state based on the plurality of resources informed by the resource information.

2. The method of claim 1, wherein the configuration information includes at least one of a number of configured allocation occasions, a configured transport block size (TBS), or an expected number of radio resource control (RRC) messages.

3. The method of claim 1, wherein the multiple transmissions include at least one of multiple downlink (DL) transmissions or multiple uplink (UL) transmissions.

4. The method of claim 1, further comprising receiving a preconfigured uplink resource (PUR) configuration request message including the configuration information from the CU.

5. The method of claim 4, wherein the configuration information comprises at least one of a number of requested preconfigured uplink resource (PUR) allocation occasions, a period of requested PUR occasions, a time offset until an initial PUR occasion, a transport block size (TBS) requested for PUR, preference for transmitting UL data and RRC messages together when UL data is transmitted using PUR, or an acknowledge (ACK) for UL data when UL data is transmitted using PUR.

6. The method of claim 4, wherein the resource information includes a PUR resource, and
wherein the PUR resource includes at least one of a number of PUR allocation occasions, a period of PUR occasions, or a time offset until an initial PUR occasion.

7. The method of claim 4, further comprising:
receiving a PUR configuration request message including the configuration information from the wireless device in a connected state; and
transmitting a radio resource control (RRC) release message including a suspend indication to the wireless device so that the wireless device transits to the inactive state,
wherein the RRC release message includes the PUR configuration.

8. The method of claim 7, further comprising:
releasing the PUR configuration for the wireless device;
transmitting a UE context release request message to the CU for requesting release of a user equipment (UE) context associated with the wireless device, wherein the UE context release request message includes a cause value related to release of the PUR configuration;
receiving, from the CU, a UE context release command message informing release of the UE context; and
transmitting a UE context release complete message to the CU.

9. The method of claim 8, wherein the PUR configuration is valid only for a cell in which the PUR configuration is received,
wherein the releasing of the PUR configuration comprises releasing the PUR configuration based on the wireless device leaving the cell, the wireless device not performing UL data transmission during a preconfigured number of consecutive PUR occasions, or expiration of timing alignment (TA) timer.

10. The method of claim 1, wherein the resource information includes a physical downlink control channel (PDCCH) for allocating the plurality of resources.

11. The method of claim 1, wherein the base station is a last serving base station.

12. The method of claim 1, wherein the CU includes a CU-control plane (CU-CP).

13. The method of claim 1 , wherein the wireless device communicates with at least one of a user equipment (UE), a network, or an autonomous vehicle other than the wireless device.

14. A distributed unit (DU) of a base station in a wireless communication system, comprising:
memory;
transceiver; and
at least one processor operatively coupled to the memory and the transceiver,
wherein the at least one processor is configured to:
control the transceiver to receive, from a central unit (CU) of the base station, configuration information for performing multiple transmissions of small data with a wireless device in an inactive state;
based on the configuration information, determine a plurality of resources for the multiple transmissions in the inactive state;
control the transceiver to transmit, to the wireless device, resource information informing the plurality of resources; and
control the transceiver to perform the multiple transmissions of small data with the wireless device in the inactive state based on the plurality of resources informed by the resource information.

15. A computer readable medium (CRM) storing instructions that, based on being executed by at least one processor, perform operations comprising:
receiving, from a central unit (CU) of the base station, configuration information for performing multiple transmissions of small data with a wireless device in an inactive state;
based on the configuration information, determining a plurality of resources for the multiple transmissions in the inactive state;
transmitting, to the wireless device, resource information informing the plurality of resources; and
performing the multiple transmissions of small data with the wireless device in the inactive state based on the plurality of resources informed by the resource information.

16. A processing apparatus operating in a wireless communication system, the processing apparatus comprising:
at least one processor; and
at least one memory operably connectable to the at least one processor,
wherein the at least one processor is adapted to perform operations comprising:
receiving, from a central unit (CU) of the base station, configuration information for performing multiple transmissions of small data with a wireless device in an inactive state;
based on the configuration information, determining a plurality of resources for the multiple transmissions in the inactive state;
transmitting, to the wireless device, resource information informing the plurality of resources; and
performing the multiple transmissions of small data with the wireless device in the inactive state based on the plurality of resources informed by the resource information.

17. A method performed by a wireless device in a wireless communication system, the method comprising:
transmitting, in a connected state to a base station, configuration information for multiple uplink (UL) transmissions of small data;
receiving, from the base station, a radio resource control (RRC) release message including a suspend indication and transiting to an inactive state, wherein the RRC release message comprises resource information informing a plurality of resources for the multiple UL transmissions in the inactivate state, and the plurality of resources are determined based on the configuration information; and
performing, in the inactive state, the multiple UL transmissions of small data to the base station based on the plurality of resources informed by the resource information.

18. A wireless device in a wireless communication system, comprising:
memory;
transceiver; and
at least one processor operatively coupled to the memory and the transceiver;
wherein the at least one processor is configured to:
control the transceiver to transmit, in a connected state to a base station, configuration information for multiple uplink (UL) transmissions of small data;
control the transceiver to receive, from the base station, a radio resource control (RRC) release message including a suspend indication and transit to an inactive state, wherein the RRC release message comprises resource information informing a plurality of resources for the multiple UL transmissions in the inactivate state, and the plurality of resources are determined based on the configuration information; and
control the transceiver to perform, in the inactive state, the multiple UL transmissions of small data to the base station based on the plurality of resources informed by the resource information.
